# EUROPÄISCHE PATENTANMELDUNG

(11) **EP 0 675 017 A1**
(43) Veröffentlichungstag der Anmeldung: **04.10.1995**
(21) Anmeldenummer: 95104436.1
(22) Anmeldetag: 25.03.1995
(51) Int. Cl.: B60J 7/22

(54) **Windabweiser für Fahrzeugdächer mit einem verschiebbaren Deckel**

(30) Priorität: 31.03.1994 DE 4411386
(71) Anmelder: WEBASTO KAROSSERIESYSTEME GmbH, D-82131 Stockdorf (DE)
(72) Erfinder: Bauer, Max, D-86919 Utting (DE); Schwarz, Markus, D-79822 Titisee-Neustadt (DE); Hirschberger, Gustl, D-81245 München (DE)
(74) Vertreter: Wiese, Gerhard

(57) **Zusammenfassung**

Die Erfindung betrifft einen Windabweiser für Fahrzeugdächer mit einem verschiebbaren Deckel (40), wobei der Windabweiser ein Luftleitprofil (4), das durch Gelenkteile (5) am vorderen Dachrahmenquerteil (2) um eine Fahrzeugquerachse schwenkbar befestigt und durch Federkraft in eine Betriebsstellung schwenkbar ist, und Hebel (6) aufweist, die jeweils einerseits an seitlichen Dachrahmenteilen (2A) schwenkbar gelagert und andererseits gelenkig mit dem Luftleitprofil (4) verbunden sind, so daß sie durch Verschieben des Deckels (40) in die Deckelschließstellung in eine Lage schwenkbar sind, in der sie das Luftleitprofil in eine Außerbetriebsstellung absenken. Jedes Gelenkteil (5) ist als federndes Schwenkbefestigungsteil ausgebildet, das mit dem Luftleitprofil (4) am vorderen Dachrahmenquerteil (2) durch eine lösbare Steckverbindung verbunden ist.

## Beschreibung

Die Erfindung betrifft einen Windabweiser für Fahrzeugdächer mit einem verschiebbaren Deckel gemäß den Merkmalen des Oberbegriffs des Anspruchs 1.

Ein derartiger Windabweiser für ein Schiebedach ist aus der DE 35 32 104 A1 bekannt. Er weist ein Luftleitprofil auf, das an seiner Vorderseite über drei auf einer gemeinsamen Achse liegende Scharniere an einem vorderen Dachrahmenquerteil festgeschraubt und dadurch an diesem angelenkt ist. Der Windabweiser ist in Ausstellrichtung mittels Schenkelfedern vorgespannt, die auf die Scharnierachsen der beiden äußeren Scharniere aufgesetzt sind. Zu beiden Seiten des Windabweisers greift über Stift-Langlochverbindungen jeweils ein Hebel am Luftleitprofil an, der mit seinem vom Windabweiser abliegenden hinteren Ende über ein Gelenk mit dem seitlichen Schiebedachrahmen schwenkbar verbunden ist. Beim Schließen des Schiebedachs drückt ein Gleitstück auf die Hebel und bringt dadurch den Windabweiser in seine Schließstellung.

Da das bei diesem Windabweiser verwendete Scharnier aus einer Vielzahl von Einzelteilen zusammengesetzt werden muß und die Befestigung am Dachrahmenquerteil durch Schrauben erfolgt, ist die Montage aufwendig und somit teuer.

Aus der DE 34 46 916 C2 ist ein Windabweiser bekannt, bei dem ein Lagerteil eines aus mehreren Teilen zusammengesetzten Scharniers durch Einclipsen an einer Kabelkanalabdeckung befestigt ist. Auch bei diesem ist die Montage aufgrund der Vielfalt von Teilen aufwendig.

Aus der DE-OS 23 25 594 ist ein Windabweiser bekannt, der zur Befestigung am Dachrahmenquerteil zwei federnde Teile aufweist, die als integrale Teile des Windabweisers ausgebildet sind. Der Windabweiser wird durch Einstecken dieser Teile in jeweilige Steckteile, die am Dachrahmenquerteil angebracht sind, an diesem schwenkbar und federnd befestigt. Durch die einstückige Ausbildung von Federteil und Windabweiser ist die Auswahl der für den Windabweiser verwendbaren Materialien jedoch eingeschränkt, da das Material des Federteils geeignete Federeigenschaften für vielfaches Verschwenken aufweisen muß und diese Federeigenschaften unter allen Betriebsbedingungen (Wärme, Kälte) über die gesamte Nutzungsdauer des Windabweisers erhalten bleiben müssen.

Aus der GB-PS 1568290 ist ein Hebedach bekannt, das über federnde Gelenkelemente in am Dachrahmen befestigten Halterungen lösbar befestigt ist, sodaß der Fahrzeugbenutzer das Hebedach aus dem Dachausschnitt gänzlich entnehmen kann.

Der Erfindung liegt die Aufgabe zugrunde, einen Windabweiser der im Oberbegriff des Anspruchs 1 genannten Art weiterzubilden, so daß seine schwenkbaren Befestigungsteile konstruktiv vereinfacht und von der Materialwahl für den Windabweiser unabhängig sind. Außerdem soll der Windabweiser am Dachrahmen ohne Werkzeug einfach montiert und auch demontiert werden können.

Diese Aufgabe wird erfindungsgemäß durch einen Windabweiser mit den Merkmalen des Anspruchs 1 gelöst. Vorteilhafte Ausgestaltungen des Windabweisers sind in den Unteransprüchen angegeben.

Durch eine Ausbildung des Gelenkteils als ein separates Teil, das eine schwenkbare Lagerung des Luftleitprofils und eine Federkraft zum Ausstellen des Windabweisers bereitstellt, kann die Wahl des Materials für das Luftleitprofil unabhängig von der Ausgestaltung und dem Material des Gelenkteils getroffen werden. Da die Schwenkachse unmittelbar von einem Federelement gebildet wird, vereinfacht sich der Aufbau des Gelenkteils erheblich. Zusätzlich wird durch die lösbare Steckverbindung an einem freien Rahmenende des vorderen Dachrahmenquerteils der Montagevorgang des Windabweisers deutlich vereinfacht und zeitlich reduziert, da das Gelenkteil an seiner festgelegten Stelle lediglich durch Auf- oder Einstecken anstatt einer Befestigung mit Schrauben befestigt wird. Die Befestigung des Gelenkteils an einem frei nach oben stehenden Rahmenende des Dachrahmenquerteils gewährleistet aufgrund der guten Zugänglichkeit eine leichte Montage ohne Werkzeug oder Hilfsmittel.

Vorzugsweise ist die Steckverbindung des Gelenkteils als kraftschlüssige Klemmverbindung ausgeführt. Sie kann jedoch auch in Kombination mit formschlüssigen Elementen, beispielsweise mit einem Sicherungsstift oder ein- und ausrastbaren Riegeln ausgeführt sein.

Vorzugsweise kann das separate Gelenkteil sowohl am Dachrahmenquerteil als auch am Luftleitprofil durch Aufstecken oder Einstecken festlegbar sein. Somit ergibt sich eine variable Befestigungsmöglichkeit in Abhängigkeit von den konstruktiven Gegebenheiten im Bereich des vorderen Dachrahmenquerteils. Durch die Lösbarkeit des Gelenkteils vom Windabweiser wird auch das Recycling bei unterschiedlichen Materialien von Windabweiser und Gelenkteil erleichtert.

In bevorzugter Ausführung kann das Gelenkteil zusätzlich ein integrales Filmscharnier im Bereich der Schwenkachse aufweisen. Die Federkraft wird durch eine angeklemmte Torsionsfeder erzeugt, die unmittelbar die Schwenkachse bildet. Somit wird die Teilevielfalt der üblichen Scharniere und deren Montageaufwand reduziert.

Vorzugsweise ist das Gelenkteil ein aus Federblech hergestelltes Federelement mit zwei integral angeformten Befestigungsteilen. Dann ist das Gelenkteil für den Windabweiser sowohl Befestigung als auch Schwenkhalterung und es stellt zusätzlich die Federkraft für die Rückstellung des Windabweisers in die Betriebsstellung zur Verfügung. Durch die einstückige Ausbildung des Gelenkteils ist kein Zusammenbau und somit keine Montagearbeit erforderlich. Die Schwenkachse kann durch ein in etwa halbkreisförmig oder in ähnlicher Form gebogenes Federteil oder durch ein annähernd S-förmig gebogenes Federteil festgelegt werden. Durch die größere Federlänge bei der S-förmigen Feder können die Materialspannungen bei Belastung der Feder reduziert werden, was der Lebensdauer der Feder zugute kommt.

Nachfolgend wird die Erfindung anhand von Ausführungsbeispielen unter Bezugnahme auf beiliegende Zeichnungen näher erläutert. Es zeigt:
- Fig. 1: in Querschnittsansicht ein erstes Ausführungsbeispiel des erfindungsgemäßen Windabweisers in seiner ausgestellten Betriebsstellung;
- Fig. 2: in perspektivischer Explosionsdarstellung ein Gelenkteil mit den jeweiligen Aufnahmen am Luftleitprofil und am Dachrahmenquerteil;
- Fig. 3: in perspektivischer Ansicht das Gelenkteil mit daran befestigter Torsionsfeder;
- Fig. 4: im Querschnitt ein zweites Ausführungsbeispiel des Windabweisers mit einem Gelenkteil in seiner Anordnung am Dachrahmenquerteil und am Luftleitprofil;
- Fig. 5: eine Frontansicht des Befestigungsteils des Gelenkteils der Fig. 4 am Dachrahmenquerteil;
- Fig. 6: eine Ansicht gemäß dem Pfeil A in Fig. 4 auf das Befestigungsteil des Gelenkteils zum Befestigen am Luftleitprofil;
- Fig. 7: im Querschnitt ein drittes Ausführungsbeispiel eines Windabweisers, wobei das Luftleitprofil in seine Betriebsstellung hochgeklappt ist; und
- Fig. 8: im Querschnitt das Gelenkteil gemäß Fig. 7 mit dem Luftleitprofil in seiner eingeklappten Außerbetriebsstellung.

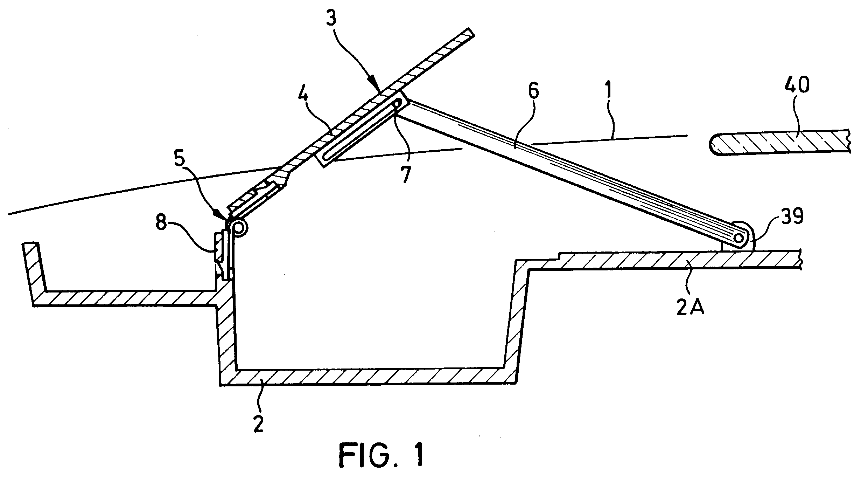

In der festen Dachfläche 1 (schematisch als Kontur dargestellt) eines Fahrzeugdachs (Fig. 1) ist eine Dachöffnung vorgesehen, die mittels eines verschiebbaren starren Deckels 40 wahlweise verschlossen oder mindestens teilweise freigelegt werden kann. Unterhalb des vorderen querverlaufenden Randes der Dachöffnung ist ein Dachrahmenquerteil 2 angeordnet, das als Vorderabschnitt eines aus Plattenpreßmasse (SMC) oder aus Blech bestehenden Dachrahmens ausgebildet ist und in einem Teil rinnenartig als Wasserablauf geformt ist. Am Dachrahmenquerteil 2 ist ein Windabweiser 3 angeordnet, der in Fig. 1 in seiner ausgeklappten Betriebsstellung dargestellt ist.

Das Fahrzeugdach und der Windabweiser sind im wesentlichen spiegelsymmetrisch zu einer Fahrzeug-Längsmittelachse ausgebildet. Die nachstehende Erläuterung der einen Seite des Windabweisers gilt daher sinngemäß auch für die andere Seite. Die verwendeten Begriffe "vorne", "hinten", "längs" und "quer" beziehen sich auf das zugehörige Fahrzeug bzw. dessen Vorwärtsfahrtrichtung.

Der Windabweiser 3 umfaßt ein Luftleitprofil 4 sowie beidseits der Fahrzeuglängsachse ein Gelenkteil 5 und seitlich einen Hebel 6, der einerseits über eine Stift-Langlochverbindung 7 an dem Luftleitprofil 4 angelenkt ist und andererseits an einem Lager 39 an einem seitlichen Dachrahmenteil 2A schwenkbar gelagert ist.

Das Dachrahmenquerteil 2 weist eine in etwa senkrecht nach oben weisende freistehende Rahmenwand 8 auf, die im Bereich des Vorderrandes der Dachöffnung des Schiebedachs angeordnet ist, und an der das Gelenkteil 5, wie nachfolgend beschrieben, befestigt wird.

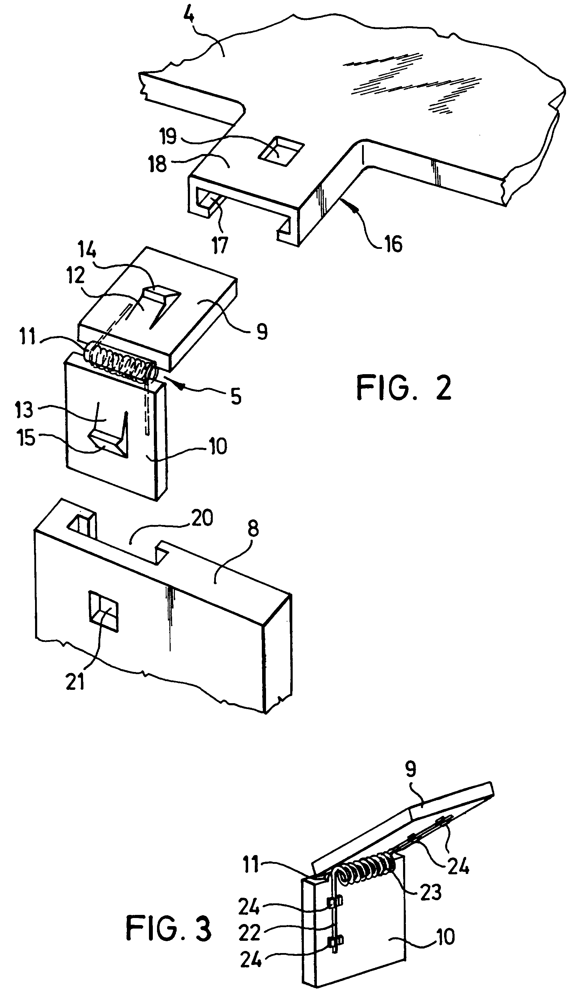

Das Gelenkteil 5 (siehe Fig. 2) weist zwei Befestigungsteile 9, 10 auf, die über eine Torsionsfeder 22 und zusätzlich über ein Filmscharnier 11 miteinander verbunden sind. Das Filmscharnier 11 ist als dünner, folienartiger Abschnitt integral mit den Befestigungsteilen 9, 10 ausgebildet. Da das Gelenkteil 5, und somit auch das Folienscharnier 11, aus Kunststoff, beispielsweise aus Polyamid besteht, läßt es aufgrund seiner Biegeelastizität ein nahezu unbegrenztes Verschwenken der beiden Befestigungsteile 9, 10 gegeneinander zu. Jedes Befestigungsteil 9, 10 enthält ein Riegelteil 12, 13 mit einem jeweiligen, als Clip ausgebildeten Haken 14, 15, der aus der Oberfläche des Befestigungsteils 9 bzw. 10 hervorsteht. Wenn auf den Haken 14, 15 gedrückt wird, kann dieser unter der Oberfläche des Befestigungsteils 9, 10 versenkt gehalten werden.

Das Luftleitprofil 4 weist für das Gelenkteil 5 eine Halterung 16 auf, die als ein Hohlprofil 17 ausgebildet ist, das an den Außenumfang des Befestigungsteils 9 angepaßt ist. Somit kann das Befestigungsteil 9 in das Hohlprofil 17 eingeschoben werden, wobei es am Umfang in etwa spielfrei gehalten ist.

Das Hohlprofil 17 weist in seiner Oberseite 18 oder falls im Gegensatz zur Darstellung in Fig. 2 ein allseitig geschlossenes Hohlprofil verwendet wird vorzugsweise an der Unterseite eine Ausnehmung 19 auf, beispielsweise eine Bohrung oder eine Ausstanzung. Beim Einschieben des Befestigungsteils 9 in die Halterung 16 wird das Riegelteil 12 über ein Abschrägung am Haken 14 elastisch in die Oberseite 18 des Befestigungsteils 9 versenkt. In seiner Endstellung in der Halterung 16 schwenkt der Haken 14 in die Ausnehmung 19 und verriegelt somit das Gelenkteil 5 mit dem Luftleitprofil 4. Durch senkrecht zur Oberseite 18 des Befestigungsteils 9 gerichteten Druck auf den Haken 14 kann dieser aus der Ausnehmung 19 heruntergedrückt werden, so daß das Riegelteil 12 entriegelt bzw. ausgerastet wird und das Gelenkteil 5 aus der Halterung 16 des Windabweisers 3 entfernt werden kann. Das Hohlprofil 17 kann das Befestigungsteil 9 an seinen Führungsflächen ganzseitig umgeben oder es kann in einem Teilbereich geöffnet sein (wie in Fig. 2 dargestellt).

Das zweite Befestigungsteil 10 des Gelenkteils 5 weist ein dem ersten Befestigungsteil 9 entsprechendes Riegelteil 13 auf. Dessen Haken 15 kann auf der gleichen oder der gegenüberliegenden Seite des Gelenkteils 5 ausgebildet sein.

Das freie Rahmenende 8 des Dachrahmenquerteils 2 ist im wesentlichen senkrecht angeordnet und weist eine der Halterung 16 des Luftleitprofils 4 entsprechende Halterung 20 auf, die im Rahmenende 8 ausgebildet ist oder alternativ dazu in einem separaten, auf das Rahmenende 8 aufsteckbaren Teil enthalten sein kann. Das zweite Befestigungsteil 10 ist in die Halterung 20 einschiebbar und in einer Ausnehmung 21 wie auf oben beschriebene Weise verriegelbar. Somit ist das Luftleitprofil 4 am Dachrahmenquerteil 2 gelagert und um das eine Schwenkachse bildende Filmscharnier 11 schwenkbar.

Des weiteren ist am Gelenkteil 5 eine Torsionsfeder 22 (Fig. 3) angebracht, deren Wicklungen 23 im Bereich des Filmscharniers 11 anliegen und deren Schenkel jeweils an einem der Befestigungsteile 9, 10 befestigt werden, beispielsweise durch wieder lösbares Festklemmen in Klemmhalterungen 24, die an der jeweiligen Oberfläche der Befestigungsteile 9,10 angeordnet sind.

Die die Schwenkachse bildende Torsionsfeder 22 hält das Gelenkteil 5 in unbelastetem Zustand in geöffneter Stellung, d. h. in einer Ausgangsstellung, in der die beiden Befestigungsteile 9, 10 beispielsweise in einem stumpfen Winkel zueinander stehen. Werden die Befestigungsteile 9, 10 gegeneinander geschwenkt, so wird die Torsionsfeder 22 gespannt.

Im Betrieb wird beim Freigeben der seitlichen Hebel 6 durch den Deckel 40 der Windabweiser 3 mittels der Federkraft der Torsionsfeder 22 in die Betriebsstellung gebracht. Durch Herabdrücken der Hebel 6 wird der Windabweiser 3 in die Außerbetriebsstellung geschwenkt.

Bei der Montage des Windabweisers 3 in der Dachöffnung des Schiebedachs wird jedes Gelenkteil 5 einerseits in die Halterung 16 am Luftleitprofil 4 eingeschoben und in seiner Endstellung verriegelt und andererseits wird das Gelenkteil 5 in die Halterung 20 am Dachrahmenquerteil 2 eingeschoben und verriegelt. Somit entfällt bei der Montage das bei herkömmlichen Windabweisern notwendige Festschrauben. Durch die ausrastbaren Riegelteile 12, 13 kann der Windabweiser 3 bei Bedarf ohne Aufwand schnell vom Dachrahmen entfernt werden.

Der Windabweiser 3 kann aus Metall oder Kunststoff bestehen. Durch die leichte Trennbarkeit des Luftleitprofils 4 von den Gelenkteilen 5 ist auch ein stoffgerechtes Recycling problemlos durchführbar.

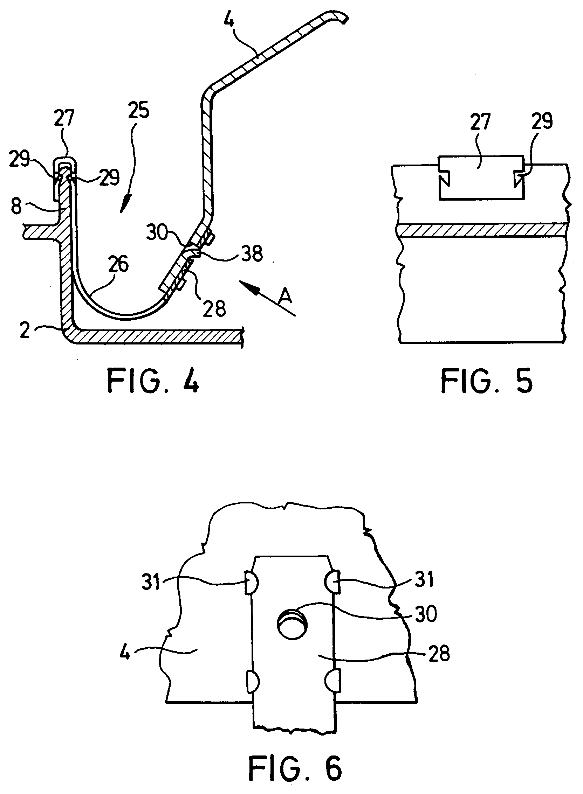

Gemäß einem zweiten Ausführungsbeispiel (Fig. 4 bis 6) weist das Gelenkteil 25 ein bandförmiges Federelement 26 mit an seinen beiden Enden integral angeformten Befestigungsteilen 27, 28 auf, welches unmittelbar die Schwenkachse des Windabweisers bildet. Das zur Anbringung am Dachrahmenquerteil 2 vorgesehene vordere Befestigungsteil 27 ist U-förmig umgebogen und nach unten offen und umgreift das beispielsweise senkrecht stehende freie Rahmenende 8, nachdem es auf dieses aufgesteckt worden ist. Das Befestigungsteil 27 wird durch herausgebogene Zacken 29 an dem Rahmenende 8 festgelegt und verriegelt und ist dadurch gegen Lockern oder Lösen vom Rahmenende 8 gesichert. Eine besonders dauerhafte Sicherung ergibt sich, wenn der Rahmen aus Preßmasse (SMC-Rahmen) besteht, in die sich die Zacken 29 einpressen können. Jedoch ist auch bei einem Metall- oder Kunststoffrahmen durch das klemmende Anpressen der Zacken 29 eine gute Sicherung geboten. Das hintere Befestigungsteil 28 ist als ebene Platte mit einer Ausnehmung 30 beispielsweise in Form einer Bohrung ausgebildet. Das Luftleitprofil 4 weist an einer zur Verbindung mit dem Gelenkteil 25 vorgesehenen Stelle abstehende Haltezungen 31 auf, die zum Festlegen des Gelenkteils 25 dienen. An den beiden gegenüberliegenden Randseitenbereichen der Festlegefläche für das Befestigungsteil 28 sind jeweils zwei Haltezungen 31 angeordnet, die das eingeschobene Befestigungsteil 28 randseitig umgreifen und es in Querrichtung spielfrei festlegen. Ein aus dem Luftleitprofil 4 gegen das Befestigungsteil 28 hervorstehender Riegel 38 wird beim Einschieben des Befestigungsteil 28 durch dieses herabgedrückt. In der Endstellung des Befestigungsteils 28 schnappt es in die Bohrung 30, wodurch das Befestigungsteil 28 am Luftleitblech 4 definiert festgelegt und verriegelt ist.

Das Federelement 26 des Gelenkteils 5 ist in vorgespanntem Zustand in etwa halbkreisbogenförmig, U-förmig oder in ähnlicher Form gebogen. Wird der Windabweiser 3 in seine Außerbetriebsstellung herabgeschwenkt (durch Betätigung der Hebel 6 entsprechend der in der DE 35 32 104 A1 beschriebenen Weise), so erfolgt dies gegen die Federkraft des Federelements 26. Dementsprechend drückt das Federelement 26 den Windabweiser 3 bzw. das Luftleitprofil 4 in die Betriebsstellung, wenn die entsprechenden seitlichen Hebel 6 für ihre Schwenkbewegung freigegeben werden. Durch Variation des Materials, der Dicke und der Breite sowie der Vorspannung des Federelements 26 kann die erforderliche Federkraft und Federcharakteristik eingestellt werden.

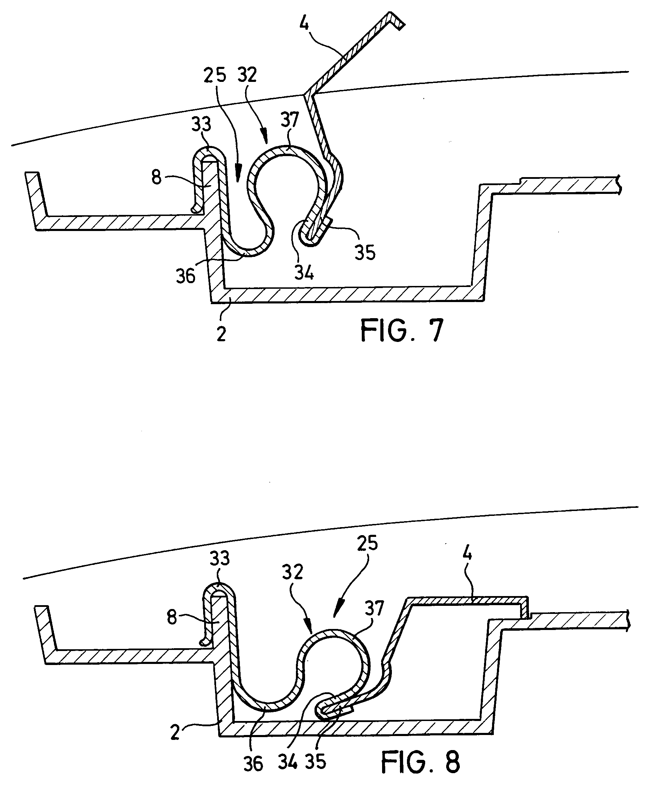

Gemäß einem dritten Ausführungsbeispiel (Fig. 7 und 8) ist in Abwandlung des zweiten Ausführungsbeispiels ein Federelement 32 des Gelenkteils 25 im wesentlichen S-förmig gebogen. Ein vorderes Befestigungsteil 33 umgreift das freie Rahmenende 8 unter Vorspannung seiner beiden Schenkel, so daß das Befestigungsteil 33 am Rahmenende 8 festgeklemmt wird. Das zweite Befestigungsteil 34 umgreift eine eingesteckte und dadurch festgeklemmte Haltefläche 35 des Luftleitprofils 4, wobei zusätzlich eine formschlüssige Verriegelung entsprechend des zweiten Ausführungsbeispiels vorgesehen sein kann.

Wird der Windabweiser 3 aus seiner ausgestellten Betriebsstellung (Fig. 7) in die eingefahrene Außerbetriebsstellung (Fig. 8) geschwenkt, so wird ein erster, dem Dachrahmenquerteil 2 benachbarter bzw. an ihm anliegender Bogen 36 des Federelements 32 gegen seine Federkraft um ein gewisses von seiner Federkonstante abhängendes Maß geöffnet, wohingegen ein zweiter, dem Luftleitprofil 4 benachbarter Bogen 37 in entsprechender Weise geschlossen wird. Somit vergrößert bzw. verkleinert sich der Radius jedes Bogens 36 und 37 und das Luftleitprofil 4 schwenkt folglich um eine festgelegte, sich aus den Radienänderungen ergebende Schwenkachse.

Durch Festlegung der Ausgangsradien der Bögen 36, 37 kann eine bestimmte Schwenkachse vorbestimmt werden. Auch kann das bandförmige Federelement 32 wie im vorigen Beispiel mit unterschiedlicher Breite und Dicke über seine Länge ausgebildet sein, so daß die Federcharakteristik gezielt beeinflußt und eingestellt werden kann. Die größere Federlänge bei einer S-förmigen Feder mit daraus resultierender geringerer spezifischer Verformung gewährleistet auch eine dauerhafte Federspannung ohne plastische Verformung des Federelements.

### Bezugszeichenliste

- 1: Dachfläche
- 2: Dachrahmenquerteil
- 2A: seitliches Dachrahmenteil
- 3: Windabweiser
- 4: Luftleitprofil
- 5: Gelenkteil
- 6: Hebel
- 7: Stift-Langlochverbindung
- 8: Rahmenwand
- 9: Befestigungsteil
- 10: Befestigungsteil
- 11: Folienscharnier
- 12: Riegelteil
- 13: Riegelteil
- 14: Haken
- 15: Haken
- 16: Halterung
- 17: Hohlprofil
- 18: Oberseite
- 19: Ausnehmung
- 20: Halterung
- 21: Ausnehmung
- 22: Torsionsfeder
- 23: Wicklung
- 24: Halteführung
- 25: Gelenkteil
- 26: Federelement
- 27: Befestigungsteil
- 28: Befestigungsteil
- 29: Zacken
- 30: Ausnehmung
- 31: Haltezunge
- 32: Federelement
- 33: Befestigungsteil
- 34: Befestigungsteil
- 35: Haltefläche
- 36: Bogen
- 37: Bogen
- 38: Riegel
- 39: Lager
- 40: Deckel

## Patentansprüche

1. Windabweiser für Fahrzeugdächer mit einem verschiebbaren Deckel (40), wobei der Windabweiser ein Luftleitprofil (4), das durch Gelenkteile (5,25) am vorderen Dachrahmenquerteil (2) um eine Fahrzeugquerachse schwenkbar befestigt und durch Federkraft in eine Betriebsstellung schwenkbar ist, und Hebel (6) aufweist, die jeweils einerseits an seitlichen Dachrahmenteilen (2A) schwenkbar gelagert und andererseits gelenkig mit dem Luftleitprofil (4) verbunden sind, so daß sie durch Verschieben des Deckels (40) in die Deckelschließstellung in eine Lage schwenkbar sind, in der sie das Luftleitprofil (4) in eine Außerbetriebsstellung absenken, **dadurch gekennzeichnet,** daß jedes Gelenkteil (5; 25) als federndes Schwenkbefestigungsteil ausgebildet ist, bei dem ein Federelement (22,26,32) unmittelbar die Schwenkachse bildet und das am vorderen Dachrahmenquerteil (2) durch eine lösbare Steckverbindung verbunden ist.

2. Windabweiser nach Anspruch 1, **dadurch gekennzeichnet**, daß das Luftleitprofil (4) mit dem Schwenkbefestigungsteil durch eine lösbare Steckverbindung verbunden ist.

3. Windabweiser nach Anspruch 1 oder 2, **dadurch gekennzeichnet**, daß das Gelenkteil (5; 25) an einem freien Rahmenende (8) auf- oder einsteckbar befestigt ist.

4. Windabweiser nach einem der Ansprüche 1 bis 3, **dadurch gekennzeichnet**, daß das Gelenkteil (5; 25) ein- und ausrastbare Riegelteile (12; 13) aufweist.

5. Windabweiser nach einem der Ansprüche 1 bis 4, **dadurch gekennzeichnet**, daß das Gelenkteil (5) zwei durch ein Filmscharnier (11) verbundene Befestigungsteile (9, 10) aufweist, an denen jeweils ein Schenkel einer Torsionsfeder (22) befestigt ist.

6. Windabweiser nach Anspruch 5, **dadurch gekennzeichnet**, daß das Dachrahmenquerteil (2) und das Luftleitprofil (4) Halterungen (16, 20) zum Aufnehmen der Befestigungsteile (9, 10) enthalten, wobei die Halterungen (16, 20) die Befestigungsteile (9, 10) zumindest teilweise umgreifen.

7. Windabweiser nach Anspruch 5 oder 6, **dadurch gekennzeichnet**, daß das Gelenkteil (5) aus Kunststoff besteht.

8. Windabweiser nach einem der Ansprüche 1 bis 4, **dadurch gekennzeichnet**, daß das Gelenkteil (25) ein aus Federblech hergestelltes Federelement (26; 32) mit einem vorderen und einem hinteren jeweils integral angeformten Befestigungsteil (27, 28; 33, 34) ist.

9. Windabweiser nach Anspruch 8, **dadurch gekennzeichnet**, daß ein federnder Abschnitt des Federelements (26) annähernd halbkreisbogenförmig gebogen ist.

10. Windabweiser nach Anspruch 8, **dadurch gekennzeichnet**, daß ein federnder Abschnitt des Federelements (32) annähernd S-förmig gebogen ist.

11. Windabweiser nach einem der Ansprüche 8 bis 10, **dadurch gekennzeichnet**, daß das Luftleitprofil (4) für jedes Befestigungsteil (28; 34) Halteteile (31) und ein Riegelteil (38) zum ein- und ausrastbaren Festlegen des Befestigungsteils (28) aufweist.

12. Windabweiser nach einem der Ansprüche 8 bis 11, **dadurch gekennzeichnet**, daß das vordere Befestigungsteil (27; 33) zum Übergreifen des freien Rahmenendes (8) U-förmig gebogen ist.

13. Windabweiser nach einem der Ansprüche 9 bis 12, **dadurch gekennzeichnet**, daß der federnde Abschnitt des Federelements (26; 32) entlang seiner Längserstreckung eine unterschiedliche Breite und/oder eine unterschiedliche Dicke aufweiset.
